# EUROPÄISCHE PATENTSCHRIFT

(11) **EP 3 568 793 B1**
(45) Veröffentlichungstag und Bekanntmachung des Hinweises auf die Patenterteilung: **31.03.2021**
(21) Anmeldenummer: 18707286.3
(22) Anmeldetag: 13.02.2018
(51) Int. Cl.: G06F 21/56, G06F 21/57, G06F 21/62, G06F 21/74

(54) **VERFAHREN UND COMPUTER MIT EINER SICHERUNG GEGEN CYBERKRIMINELLE BEDROHUNGEN**
METHOD AND COMPUTER INCLUDING PROTECTION AGAINST CYBER CRIMINAL THREATS
PROCÉDÉ ET ORDINATEUR COMPRENANT UNE SÉCURISATION CONTRE LES MENACES CYBERCRIMINELLES

(30) Priorität: 09.03.2017 EP 17160155
(43) Veröffentlichungstag der Anmeldung: 20.11.2019
(73) Patentinhaber: Siemens Aktiengesellschaft, 80333 München (DE)
(72) Erfinder: VERMA, Amit, 85521 Ottobrunn (DE)
(86) Internationale Anmeldenummer: PCT/EP2018/053532
(87) Internationale Veröffentlichungsnummer: WO 2018/162183

(56) Entgegenhaltungen:
- EP-A1- 1 564 623
- WO-A1-2015/076790
- US-A1- 2010 024 035

## Beschreibung

Die Erfindung betrifft ein Verfahren zur Sicherung eines Computers gegen cyberkriminelle Bedrohung gemäß dem Oberbegriff des Patentanspruchs 1, und einen Computer mit einer Sicherung gegen cyberkriminelle Bedrohungen gemäß dem Oberbegriff des Patentanspruchs 7.

Computer aller Art, die mit einem Datennetz und hierbei insbesondere mit dem Internet verbunden sind, sind gebräuchlicher Weise mit Schutzmaßnahmen gegen cyberkriminelle Bedrohungen ausgerüstet. Cyberkriminelle Bedrohungen sind in vielfacher Ausprägung bekannt, insbesondere als Computerviren, Computerwürmer, Trojanische Pferde, Backdoors ("Hintertüren"), Spyware, Scareware, Ransomware etc. Oft werden diese verschiedenen Bedrohungen auch unter dem Oberbegriff "Malware" zusammengefasst.

EP 1 564 623 A1 offenbart ein Intrusion Detection-System, das Sicherheitsmaßnahmen implementiert, wenn eine Sicherheitsbedrohung erkannt wird. US 2010/024035 A1 offenbart ein Verfahren, das erkennt, ob ein auf den Computer geladenes Softwaremodul ein anfälliges Softwaremodul ist. WO 2015/076790 A1 offenbart ein Intrusion Detection-System, das basierend auf Aktivitätsdaten, Bedrohungen für das Gerät identifiziert und auch Reaktionen auf bestimmte Bedrohungen identifiziert und durchführt.

Die genannten Bedrohungen bzw. Angriffe beziehen sich häufig auf einzelne Programme, Routinen, Laufzeitbibliotheken oder anderen ausführbaren Programmcode, der im Folgenden unter dem Oberbegriff "Module" subsumiert werden soll. Solche Module können entsprechende Sicherheitslücken aufweisen, die manchmal auch "Exploits" genannt werden. Sobald solche Sicherheitslücken bekannt oder darauf spezialisierte Schadprogramme verfügbar werden, sind die betroffenen Computer erfahrungsgemäß einer erhöhten Anzahl von Angriffen ausgesetzt, die diese Lücken auszunutzen versuchen.

In den industriellen Automatisierungsanordnungen sind die dort verwendeten datentechnischen Einrichtungen, insbesondere die speicherprogrammierbaren Steuerungen, in den ersten Produktgenerationen nicht mit dem Internet verbunden gewesen, also sozusagen in einem datentechnischen Inselbetrieb betrieben worden, so dass für Bedrohungen "von außen" nur wenige oder keine Schutzmaßnahmen vorgesehen waren; lediglich lokale Schutzmaßnahmen wie Zugriffsschutz mittels Passwörtern etc. waren vorgesehen. Mit der breiten Einführung von vernetzten Automatisierungssystemen, dem Internet der Dinge (Industrial Internet of Things - IIoT), was oft auch unter dem Oberbegriff "Industrie 4.0" zusammengefasst wird, sind auch die industriellen Automatisierungsanordnungen (ICS - Industrial Control Systems) zunehmend cyberkriminellen Bedrohungen ausgesetzt. Folglich werden auch für die industriellen Komponenten Schutzmaßnahmen gegen solche Bedrohungen vorgesehen.

In Bezug auf "verwundbare" Software bzw. Module reicht es oft nicht aus, Einstellungen in Firewalls oder anderen Filtern zu verändern, sondern oft ist die einzige Maßnahme die Deaktivierung bzw. De-Installation der betroffenen Module, bis eine verbesserte Version der Module verfügbar ist und installiert werden kann. Typischerweise geht der vermehrte Einsatz von Schutzmaßnahmen, der die Sicherheit gegen cyberkriminelle Bedrohungen bzw. "Malware" erhöht, zu Lasten einer Leistungsfähigkeit (Performance) und einem Bedienkomfort (usability) eines Computers allgemein und eines industriellen Automatisierungssystems insbesondere. In Bezug auf die Deaktivierung von Modulen bedeutet dies, dass die Anwendungsprogramme und die Teile eines Betriebssystems, die ein solches Modul verwenden, nicht mehr zur Verfügung stehen und die entsprechenden mit den Programmen bzw. Betriebssystem-Modulen zur Verfügung gestellten Funktionen nicht mehr zur Verfügung stehen, was entsprechende Einschränkungen in Funktionalität und Komfort nach sich zieht. Andererseits können bzw. dürfen jedoch wichtige Kern-Funktionen nicht abgeschaltet werden und daher ist fallweise eine Deaktivierung sicherheitskritischer Module nicht möglich oder geht zumindest mit inakzeptablen Einbußen der Nutzbarkeit eines Computers einher. Dies führt also dazu, dass die Schutz- bzw. Abwehrmaßnahmen, die für einen Computer im industriellen Umfeld vorgesehen werden, immer einen Kompromiss zwischen einem Risikoschutz (security level) einerseits und einer Anwendbarkeit (Performance, usability, Komfort) andererseits darstellen.

Nachteilig daran ist, dass in Folge des zu wählenden Kompromisses oft weder die Performance / Nutzbarkeit / Komfort noch die Sicherheit optimal eingestellt sind.

Das Problem wurde in der Vergangenheit oft dadurch gelöst, dass aufwändige Maßnahmen, beispielsweise die De-Installierung angreifbarer oder "verwundbarer" Software, und andere Maßnahmen manuell gesteuert und erst dann vorgenommen wurden, wenn beispielsweise durch Medien oder andere Meldungen eine gezielte Bedrohung bekannt geworden war.

Ein solcher Ansatz ist jedoch nur reaktiv, d.h., dass oft erst lange nach Beobachtung und Registrierung einer konkreten Bedrohung oder eines konkreten Angriffs bestimmte Maßnahmen ergriffen worden sind, und zudem wenig selektiv, weil oft "vorsichtshalber" ganze Programmpakete deinstalliert wurden.

Es ist also eine Aufgabe der vorliegenden Erfindung, die auf einen Computer anzuwendenden Schutzmaßnahmen gegen cyberkriminelle Bedrohungen schneller und einfacher und zielgenau auszuwählen.

Es ist eine Kernidee der erfindungsgemäßen Lösung des Problems, für einen Computer und dabei insbesondere für eine Komponente einer industriellen Automatisierungsanordnung (ICS) eine Anzahl von Sicherheitsstufen ("security settings") zu verwalten, wobei die Sicherheitsstufen jeweils definieren, welche Funktionen des Computers bzw. der Automatisierungsanordnung oder der betroffenen Computergesteuerten Automatisierungskomponente in der jeweiligen Sicherheitsstufe unabdingbar sind, und welche Funktionen optional sind, also ggf. deaktiviert werden dürfen. Die Anwendungsprogramme und die Teile des Betriebssystems, die die jeweiligen Funktionen bzw. Funktionalitäten bereitstellen, bestehen dabei aus einzelnen Modulen, insbesondere ausführbare Programme, Programmteile oder Laufzeitbibliotheken (DLL's), wobei die einzelnen Module auch jeweils Bestandteil mehrerer Anwendungsprogramme und mehrerer Teile des Betriebssystems sein können. Sofern sich eines der Module als gefährdet herausstellt, indem beispielsweise eine Sicherheitswarnung in Bezug auf das entsprechende Modul veröffentlicht wird, soll erfindungsgemäß dieses Modul und damit das davon betroffene Anwendungsprogramm bzw. der davon betroffene Teil des Betriebssystems nur dann deaktiviert werden, sofern davon keine Funktionalität betroffen ist, die unter der derzeit geltenden Sicherheitsstufe unabdingbar ist. Im Falle einer strengen Sicherheitsstufe gilt dies beispielsweise nur für solche Funktionen, die einer Kernfunktionalität entsprechen, die dann keinesfalls ausfallen dürfen. Bei einer geringeren Sicherheitsstufe, die beispielsweise im Falle eines Systemtests oder bei weniger wichtigen Einheiten gelten kann, können weitergehende Funktionen, insbesondere Komfort-Funktionen, gegen eine Deaktivierung gesperrt sein, so dass dann auch solche Komfort-Funktionen und andere Funktionen sogar im Falle einer Bedrohung nicht deaktiviert werden. Dadurch ist es möglich, den im Falle einer Bedrohung eintretenden Verlust an Funktionalität oder Komfort anhand einer Sicherheitsstufe zu steuern.

Die Aufgabe wird insbesondere durch ein Verfahren gemäß dem Patentanspruch 1 und durch einen Computer gemäß dem Patentanspruch 7 gelöst.

Dabei wird ein Verfahren zur Sicherung eines Computers, insbesondere einer industriellen Automatisierungskomponente, gegen eine cyberkriminelle Bedrohung vorgeschlagen, wobei auf dem Computer eine Anzahl Anwendungsprogramme installiert ist, wobei die Anwendungsprogramme jeweils aus einer Anzahl Modulen, insbesondere DLL's und andere ausführbare Programmbausteine, bestehen, und wobei verschiedene der Anwendungsprogramme und somit Module für verschiedene Funktionen des Computers benötigt werden. Dabei sind für den Computer zumindest zwei Sicherheitsstufen definiert, wobei für jede der Sicherheitsstufen diejenigen Funktionen definiert sind, die im Falle einer diesbezüglichen cyberkriminellen Bedrohung nicht deaktiviert werden dürfen und/oder welche Funktionen im Falle einer diesbezüglichen cyberkriminellen Bedrohung deaktiviert werden dürfen, wobei anhand von Informationen über eine aktuelle cyberkriminelle Bedrohung für zumindest eines der davon betroffenen Module die davon betroffenen Funktionen identifiziert werden, wobei anhand der aktuellen Sicherheitsstufe diejenigen der identifizierten Funktionen und Module ausgewählt werden, die deaktiviert werden dürfen, und wobei die ausgewählten Module gesperrt und die davon betroffenen Funktionen deaktiviert werden. Dadurch ist es möglich, dynamisch optionale Softwaremodule in Abhängigkeit von einer jeweiligen cyberkriminellen Bedrohung und abhängig von einer Sicherheitsstufe des Computers abzuschalten, wodurch der nutzbare Funktionsumfang des Computers stets in optimaler Weise sowohl an eine Bedrohungslage als auch an jeweils geltende Betriebsbedingungen angepasst werden kann.

Die Aufgabe wird außerdem durch einen Computer, insbesondere eine industrielle Automatisierungskomponente, mit einer Sicherung gegen cyberkriminelle Bedrohungen gelöst, wobei die Anwendungsprogramme jeweils aus einer Anzahl Modulen, insbesondere DLL's und andere ausführbare Programmbausteine, bestehen, und wobei verschiedene der Anwendungsprogramme und somit Module für verschiedene Funktionen des Computers benötigt werden. Dabei sind für den Computer zumindest zwei Sicherheitsstufen definiert, wobei für jede der Sicherheitsstufen diejenigen Funktionen definiert sind, die im Falle einer diesbezüglichen cyberkriminellen Bedrohung nicht deaktiviert werden dürfen und/oder welche Funktionen im Falle einer diesbezüglichen cyberkriminellen Bedrohung deaktiviert werden dürfen, und wobei der Computer dazu eingerichtet ist, Informationen über eine aktuelle cyberkriminelle Bedrohung für zumindest eines der davon betroffenen Module zu empfangen und anhand dieser Informationen die davon betroffenen Funktionen zu identifizieren, wobei anhand der aktuellen Sicherheitsstufe diejenigen der identifizierten Funktionen und Module ausgewählt werden, die deaktiviert werden dürfen, und wobei die ausgewählten Module gesperrt und die davon betroffenen Funktionen deaktiviert werden. Durch einen solchen Computer können dieselben Vorteile realisiert werden, die bereits hinsichtlich des Verfahrens beschrieben worden sind.

Vorteilhafte Ausgestaltungen der Erfindung sind in den abhängigen Patentansprüchen angegeben, wobei deren Merkmale und Vorteile sowohl einzeln, als auch in sinnvoller Kombination miteinander realisiert werden können.

Vorteilhaft wird das Verfahren eingesetzt, wenn ein- und dasselbe Modul von verschiedenen Anwendungsprogrammen und/oder dem Betriebssystem des Computers verwendet wird und somit zur Bereitstellung mehrerer verschiedener Funktionen des Computers erforderlich ist. In solchen Fällen wird vorteilhaft geprüft, ob ein von einer Bedrohung betroffenes Modul in zumindest einer nicht-deaktivierbaren Funktion bzw. den damit verbundenen Anwendungsprogramm und/oder Betriebssystemteilen, verwendet wird. Sofern dies der Fall ist, kann das Modul selbst nicht deaktiviert bzw. deinstalliert werden, es können jedoch vorteilhaft diejenigen Funktionen und damit die mit diesen Funktionen verbundenen Anwendungsprogramme bzw. Betriebssystem-Teile deaktiviert werden, für die eine Deaktivierung unter der derzeit geltenden Sicherheitsstufe erlaubt ist. Somit wird zwar das betroffene Modul selbst nicht entfernt bzw. deaktiviert, jedoch dessen Nutzung eingeschränkt, wodurch sich die Verletzbarkeit des gesamten Computers auf das Modul bezogen zwar nicht vollständig beseitigen lässt, jedoch verringern lässt.

In vielen Fällen sind die Module in verschiedenen Versionen oder Ausgabeständen verfügbar, wobei nicht jeder Version bzw. jeder Aufgabestand gleichermaßen verletzbar ist bzw. sicherheitstechnische Unzulänglichkeiten aufweist. In solchen Fällen ist es vorteilhaft, wenn mit den Informationen über die cyberkriminellen Bedrohungen für die Module auch Informationen über die konkret betroffenen Versionen oder Ausgabestände der entsprechenden Module bereitgestellt und berücksichtigt werden. Eine Deaktivierung der Module bzw. der entsprechenden Anwendungsprogramme, Betriebssystemteile und daraus resultierende Funktionen erfolgt erfindungsgemäß nur dann, wenn eine kritische Version des Moduls installiert ist. Vorteilhaft wird in solchen Fällen insbesondere in einem Netzwerk oder auf einer Herstellerseite des entsprechenden Moduls nach einer neueren, etwaig nicht bedrohten Version des Moduls, gesucht und ggf. das installierte, sicherheitstechnisch kritische Modul durch eine bessere Version ersetzt.

Analog zu den Funktionen auf Anwendungsebene, die durch entsprechende Anwendungsprogramme bereitgestellt werden und wobei die Anwendungsprogramme verschiedene Module enthalten können, können diese oder andere Module zugleich auch Bestandteil des Betriebssystems sein. In solchen Fällen können auch entsprechende Funktionalitäten des Betriebssystems im Falle einer Verletzbarkeit der diesbezüglichen Module deaktiviert werden, sofern es sich nicht um eine Kern-Funktionalität handelt und sofern die entsprechende Funktionalität nicht gemäß der jeweils geltenden Sicherheitsstufe unabdingbar ist. Somit kann vorteilhaft eine Definition einer Sicherheitsstufe auch entsprechende Funktionen eines modularen Betriebssystems umfassen. Bei Funktionen des Computers, die sowohl von Teilen des Betriebssystems als auch von Anwendungsprogrammen gebildet werden, gilt entsprechendes.

Die Reaktion auf die Erkenntnis, dass ein im Betrieb befindliches Modul von einer cyberkriminiellen Bedrohung betroffen ist, kann zu unterschiedlichen Reaktionen führen, wobei die Reaktion auch von einer Sicherheitsstufe abhängen kann. Beispielsweise ist es in weniger kritischen Fällen möglich, das entsprechende Modul lediglich zu deaktivieren, also nicht mehr zu verwenden. Es kann jedoch auch angezeigt sein, das entsprechende Modul als kritisch zu kennzeichnen, indem beispielsweise der Dateiname geändert wird oder dem Dateinamen eine entsprechende Bemerkung angehängt wird. Es ist auch möglich, ein solches Modul in einen gesonderten Speicherbereich zu verschieben, also in einen gesonderten Bereich einer Festplatte beispielsweise zu kopieren oder den Programmcode des Moduls nicht-ausführbar zu machen, indem beispielsweise der Programmcode verschlüsselt wird. Sollte sich später herausstellen, dass die Bedrohung des Moduls nicht mehr besteht, weil beispielsweise entsprechende Filter in einer Firewall aufgeschaltet wurden oder andere Maßnahmen ergriffen wurden, können diese Maßnahmen wieder rückgängig gemacht werden. Auch ist es möglich, bei einer späteren Umschaltung einer Sicherheitsstufe, die beispielsweise eine Aktivierung des Moduls wieder erforderlich macht, die entsprechenden Maßnahmen rückgängig zu machen. Für solche Fälle ist es selbstverständlich sinnvoll, das betroffene Modul nicht endgültig von der betroffenen Maschine zu löschen. Umgekehrt ist es auch möglich, ein Modul, welches aufgrund einer derzeitigen Sicherheitsstufe weiterbetrieben werden muss, als betroffen zu markieren oder eine entsprechende Vormerkung in einem Vormerke-Speicher einzutragen, so dass direkt nach einer Änderung der Sicherheitsstufe erneut überprüft werden kann, ob das betroffene Modul nicht doch abgeschaltet bzw. deaktiviert werden kann oder muss.

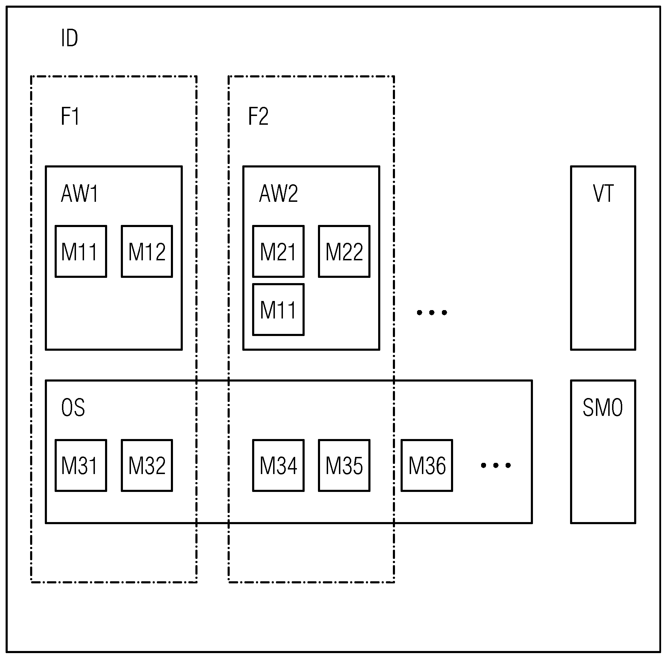

Ein Ausführungsbeispiel des erfindungsgemäßen Verfahrens wird nachfolgend anhand der Zeichnung erläutert. Das Beispiel dient gleichzeitig der Erläuterung eines erfindungsgemäßen Computers. Dabei zeigt die einzige Figur in schematischer Darstellung einen Computer (industrielle Komponente), der mit mehreren modularen Anwendungsprogrammen und einem modularen Betriebssystem ausgestattet ist, und der Einrichtungen zur Ausführung des Verfahrens aufweist.

Dabei zeigt die einzige Figur in schematischer Darstellung als Computer eine industrielle Automatisierungskomponente mit verschiedenen Modulen (Software-Module) und Einrichtungen zur Ausführung des erfindungsgemäßen Verfahrens.

In der Figur ist ein Computer ID (Industrial Device) dargestellt, auf dem ein Betriebssystem OS (Operating System) und zwei Anwendungsprogramme AW1, AW2 installiert sind. Das Betriebssystem OS und die Anwendungsprogramme AW1, AW2 bestehen in diesem vereinfachten Beispiel im Wesentlichen aus Modulen M11, ..., M36, wobei diese Module M11, ..., M36 beispielsweise Laufzeit-Bibliotheken (DLL's), ausführbare Dateien ("Excel-Dateien"), Skripte oder anderer ausführbarer Programmcode sind. Der Computer ID weist weiterhin eine Bedrohungs-Registereinheit VT (Vulnerability Tracker) und eine Sicherheits-Steuerung SMO (Security Mode Orchestrator) auf.

Es soll angenommen werden, dass der Computer ID verschiedene Funktionen F1, F2 aufweist, wobei jede der Funktionen F1, F2 eine Anzahl der Anwendungsprogramme AW1, AW2 und somit eine Anzahl der Module M11, ..., M36 zur Ausübung der entsprechenden Funktionen F1, F2 verwendet. Die Funktionen F1, F2 verwenden gleichzeitig auch bestimmte Teile des vorzugsweise modular aufgebauten Betriebssystems OS. Ein- und dasselbe Modul M11, ..., M36 kann von mehreren Anwendungen AW1, AW2 und gleichzeitig oder alternativ auch von dem Betriebssystem OS verwendet werden. Für das Beispiel kann angenommen werden, dass die Funktion F1 eine industrielle Steuerungsanwendung ist, mit der ein industrieller Prozess oder ein industrieller Automatisierungsvorgang oder dergleichen gesteuert wird. Die Funktion F2 kann beispielsweise ein E-mail-Programm sein, mit dem ein Benutzer des Computers ID oder eine der Anwendungen AW1, AW2 kommunizieren kann.

In dem vereinfachten Ausführungsbeispiel der Figur sind beispielsweise der Anwendung AW1 nur die Module M11, M12 zugeordnet, während der Anwendung AW 2 andere Module M21, M22 zugeordnet sind. Zusätzlich greift die Anwendung AW2 auch auf das Modul M11 zu, welches auch von der Anwendung AW1 verwendet wird. Dabei ist es unerheblich, ob das Modul M11 tatsächlich zweimal auf dem Computer ID installiert ist, oder nur einmal, aber von beiden Anwendungsprogrammen AW1, AW2 verwendet wird.

Beispiele für Module M11, ..., M36 können beispielsweise ein Verschlüsselungs-Modul (z.B. Open SSL) oder eine Standard-Bibliothek (z.B. glibc - GNU-C-Bibliothek) sein. Typischerweise werden Sicherheitsmängel (Security Vulnerabilities) von Software-Modulen regelmäßig von Software-Entwicklern oder von Organisationen im Bereich der Cyber-Sicherheit aufgefunden und veröffentlicht. Manche Bedrohungen werden auch in öffentlichen Verzeichnissen aufgelistet (z.B. National Vulnerability Database).

Der in der Figur dargestellte Computer ID zeigt zwei weitere Module, nämlich die Bedrohungs-Registereinheit VT ("Vulnerability Tracker") und die Sicherheitssteuerung SMO ("Security Mode Orchestrator").

Die Bedrohungs-Registereinheit VT führt eine Liste mit allen Modulen M11, ..., M36, die von dem Computer ID verwendet werden, nämlich von den Anwendungsprogrammen AW1, AW2 und vorzugsweise auch von dem Betriebssystem OS. Die Einheit VT beobachtet bzw. registriert auch die auf diese Module M11, ..., M36 verfügbaren Informationen über cyberkriminelle Bedrohungen ("Vulnerabilities"). Diese Liste wird aktualisiert, sobald ein neues Modul zu dem Computer beispielsweise als Resultat einer Installation weiterer Funktionen (features) hinzugefügt werden. Umgekehrt wird auch bei De-Installationen von Features oder Funktionen F1, F2 die in der Liste geführten Informationen angepasst.

Die Bedrohungs-Registereinheit VT kann beispielsweise regelmäßig von einem Hersteller des Computers ID oder der Anwendungsprogramme AW1, AW2 oder von einer der bereits beschriebenen externen Datenbanken (z.B. National Vulnerability Database) Informationen über sicherheitstechnisch auffällige Module M11, ..., M36 beziehen. Es kann auch eine Benutzerschnittstelle vorgesehen sein, so dass ein Benutzer manuell Bedrohungsinformationen oder dergleichen eingeben oder editieren kann. Die Einheit VT kann in einer Ausführungsform auch selbsttätig einen Sicherheitswert oder Bedrohungswert (criticality score) den einzelnen Modulen M11, ..., M36 zuordnen, beispielsweise basierend auf den empfangenen Informationen oder anhand eigener Beobachtungen, wobei die eigenen Beobachtungen beispielsweise ein abweichendes, insbesondere gestiegenes Kommunikationsverhalten der Module oder ungewöhnliche Speicherzugriffe der Module feststellt. Grundsätzlich kann die Bedrohungs-Registereinheit über jedes der Module M11, ..., M36 eine Aussage über den Grad einer derzeitigen cyberkriminellen Bedrohung aufweisen. Die Bedrohungs-Registereinheit VT kann in einer Ausführungsform auch Anweisungen darüber empfangen oder bereits umfassen, wie mit einem bedrohten Modul verfahren werden soll, beispielsweise bei einem hohen Sicherheitsrisiko "deinstallieren" und bei einem moderaten Risiko "Benutzung einschränken" oder "Zugriff auf Speicher begrenzen" oder dgl.

Die Sicherheits-Steuerung SMO (Security Mode Orchestrator) implementiert eine Anzahl von Sicherheitsstufen für den Computer ID, beispielsweise Sicherheitsstufe S1 und Sicherheitsstufe S2. Für jede Sicherheitsstufe S1, S2 führt die Steuerung SMO eine Liste mit denjenigen Funktionen F1, F2 und somit der korrespondierenden Module M11, ..., M35, die bei Gültigkeit der jeweiligen Sicherheitsstufe S1, S2 deaktiviert werden dürfen, oder umgekehrt nicht deaktiviert werden dürfen. Diese Liste kann auch "online" über ein Netzwerk von einem Hersteller oder einem zentralen Administrator angepasst werden. Auch eine manuelle Anpassung über das bereits erwähnte optionale Benutzer-Interface ist möglich. Die Sicherheits-Steuerung SMO hat Zugriff auf die Informationen der Bedrohungs-Registereinheit VT. Basierend auf diesen Informationen entscheidet die Sicherheits-Steuerung SMO, welche Funktionen F1, F2 von den für die Module M11, ..., M36 bekannten derzeitigen Bedrohungen betroffen sind. Dabei können alternativ zu binären Informationen (Betroffen: ja oder nein) auch graduelle Werte (Bedrohungslevel: x Prozent) verarbeitet werden, wobei dann Schwellwerte für die Entscheidung über die mögliche Verwendung eines Moduls definiert sein sollten. In Abhängigkeit von der derzeit eingestellten Sicherheitsstufe S1, S2, die ggf. auch jeweils eigene Schwellwerte definieren, entscheidet dann die Sicherheits-Steuerung SMO, welche Funktionen mit betroffenen Modulen abgeschaltet werden dürfen, wonach die Sicherheits-Steuerung SMO die zur Abschaltung freigegebenen Anwendungen AW1, AW2 und die entsprechenden Teile des Betriebssystems OS auffordert, den Betrieb einzustellen, und danach für eine Deaktivierung der "verwundbaren" Module sorgt.

In einer alternativen Ausgestaltung kann die Sicherheits-Steuerung SMO auch zusätzlich dynamisch die Sicherheitsstufe S2, S2 basierend auf global verfügbaren Cyber-Sicherheitsinformationen (Cyber-security level indicator, z.B. Symantec Threatcon) einstellen.

Als Beispiel kann angenommen werden, dass der Computer ID eine industrielle Steuerung PLC (Programmable Logic Controller) mit einem Betriebssystem OS und einem Steuerungsprogramm als Funktion ist. Das Steuerungsprogramm stellt die Kernfunktionalität der Steuerung PLC dar. Weiterhin kann ein Benutzerprogram auf der Steuerung PLC eine weitere Funktion bereitstellen, welche Alarme und Events von dem Steuerungsprogramm bezieht und an eine externe E-mail-Adresse des Benutzers mittels verschlüsselter E-mail-Kommunikation versendet. Dieses Benutzerprogramm kann beispielsweise das bekannte Open SSL-Modul zur Verschlüsselung verwenden.

Es sei weiter angenommen, dass die beschriebene Steuerung in einer Fertigungseinrichtung betrieben wird und alle Funktionen und Programme der Steuerung PLC in einer Sicherheitsstufe S1 aktiviert sind. Ferner sei angenommen, dass das Benutzerprogramm, welches zum Versenden verschlüsselter E-mails eingerichtet ist, eine optionale Funktion darstellt und in einer Sicherheitsstufe S2 deaktiviert werden darf. Es sei angemerkt, dass die hier beschriebenen Sicherheitsstufen willkürlich gewählt sind und in einer praktischen Realisierung vollkommen anders definiert sein können.

Im Folgenden werden die Schritte beschrieben, die zur Ausführung des Verfahrens auf dem Computer ID durchgeführt werden, wobei hier angenommen werden soll, dass die Steuerung mit der Sicherheitsstufe S2 betrieben wird.

In einem ersten Schritt empfängt die Bedrohungs-Registereinheit VT Informationen über derzeitige Bedrohungen, die in diesem Ausführungsbeispiel das Open SSL-Modul betreffen, welches für die Verschlüsselung von E-Mail-Kommunikation verwendet wird.

Im nächsten Schritt empfängt die Sicherheits-Steuerung SMO eine Liste mit Modulen (im Folgenden L1 genannt), die in der Bedrohungs-Registereinheit VT als bedroht gekennzeichnet sind. Dazu gehört auch das oben genannte Open SSL-Modul.

Im nächsten Schritt entscheidet die Sicherheits-Steuerung SMO anhand der Liste L1 die Liste der Funktionen (im Folgenden als Liste F1 bezeichnet), die mit sicherheitskritischen Modulen arbeiten. Der E-Mail-Dienst, der das Open SSL-Modul verwendet, gehört dazu.

Im nächsten Schritt entscheidet die Sicherheits-Steuerung SMO anhand der Liste F1 und anhand der derzeit geltenden Sicherheitsstufe (S2), welche der Module abgeschaltet werden dürfen, und speichert diese Liste beispielsweise in einer Liste F2.

Im nächsten Schritt fordert die Sicherheit-Steuerung SMO die Anwendungsprogramme und/oder das Betriebssystem OS zur Deaktivierung der Funktionen aus der Liste F2 auf; dadurch wird das Anwendungsprogramm zur E-Mail-Kommunikation angehalten und anschließend die betroffenen, bedrohten Module gesperrt oder deinstalliert, wozu auch das Open SSL-Modul gehört.

Bezogen auf dieses Ausführungsbeispiel gilt also, dass in dem Fall, in dem eine sicherheitskritische Bedrohung für das Open SSL-Modul festgestellt wird, dieses deaktiviert und/oder von der Steuerung deinstalliert wird, sofern das Modul nicht für eine Funktion benötigt wird, welche unter der derzeitigen Sicherheitsstufe nicht entbehrlich ist - in diesem Fall also eine Kernfunktionalität. Wäre also im aufgezeigten Beispiel das Modul Open SSL auch für die Kernfunktionalität der Steuerung PLC notwendig, dürfte zwar die E-mail-Funktionalität des Benutzerprogramms deaktiviert werden und damit die Nutzung des Moduls Open SSL eingeschränkt werden, jedoch dürfte das Modul Open SSL in diesem Fall nicht komplett deaktiviert oder gar deinstalliert werden. In diesem Fall kann die sicherheitskritische Bedrohung durch das derzeit verletzbare Modul nicht vollständig eingedämmt werden, aber immerhin durch die Einschränkung der Nutzung des Moduls verringert werden.

Wenn zu einem späteren Zeitpunkt ein "Sicherheitspatch" zur Korrektur des Moduls Open SSL verfügbar und angewendet wird und somit die Bedrohung für die Steuerung PLC beseitigt ist, kann das Open SSL-Modul erneut aktiviert werden und die volle Funktionalität der Steuerung PLC wieder hergestellt werden.

In einer vorteilhaften Ausgestaltung kann der Computer ID und somit eines der beschriebenen Module, insbesondere das Modul SMO, auch aktiv nach einer neueren Version des Moduls Open SSL suchen, welches von der Sicherheitslücke nicht bedroht ist, und dafür Sorge tragen, dass diese neue Version installiert wird.

Grundsätzlich ist das vorstehend beschriebene Verfahren geeignet, optionale Software-Module, also solche, die nicht zwingend für eine bestimmte Betriebsart bzw. für eine bestimmte Sicherheitsstufe benötigt werden, dynamisch zu deaktivieren oder in eine Quarantäne zu versetzen oder dergleichen, wenn für das entsprechende Modul eine sicherheitskritische Bedrohung bekannt wird.

Die Anwendung von Sicherheits-Updates und sogenannten Sicherheitspatches und der Update entsprechender Software-Bestandteile ist ein komplexer Vorgang, der im allgemeinen nur selten durchgeführt wird, weil eine solche Systempflege aufwändig ist und oft auch mit Betriebsunterbrechungen einhergeht. Aus diesem Falle sind im Stand der Technik viele Automatisierungssysteme für längere Zeit nicht auf einem aktuellen Sicherheitsstand. Dies führt dazu, dass diese Systeme vergleichsweise anfällig für Sicherheitsrisiken sind. Mit Einzug moderner Paradigmen wie dem Industrial Internet of Things (IIoT) sind immer mehr Automatisierungssysteme und industrielle Computer mit dem Internet verbunden, die vormals noch vom Internet isoliert betrieben wurden. Solche Systeme sind besonders anfällig für cyberkriminelle Bedrohungen, solange sie nicht auf dem neuesten Stand sind.
Das vorstehend beschriebene Verfahren reduziert die Angriffsmöglichkeiten auf diese vormals "ungehärteten" (unpatched) Systeme.

## Patentansprüche

1. Verfahren zur Sicherung eines Computers (ID), insbesondere einer industriellen Automatisierungskomponente,
gegen eine cyberkriminelle Bedrohung,
wobei auf dem Computer (ID) eine Anzahl Anwendungsprogramme (AW1, AW2) installiert ist,
wobei die Anwendungsprogramme (AW1, AW2) jeweils aus einer Anzahl Modulen (M1, ..., M36), insbesondere DLL's und anderer ausführbarer Programmcode, bestehen, und
wobei verschiedene der Anwendungsprogramme (AW1, AW2) und somit Module (M1, ..., M36) für verschiedene Funktionen (F1, F2) des Computers (ID) benötigt werden,
**dadurch gekennzeichnet,**
**dass** für den Computer (ID) zumindest zwei Sicherheitsstufen definiert sind, wobei für jede der Sicherheitsstufen diejenigen Funktionen (F1, F2) definiert sind, die im Falle einer diesbezüglichen cyberkriminellen-Bedrohung nicht deaktiviert werden dürfen und/oder welche Funktionen (F1, F2) im Falle einer diesbezüglichen cyberkriminellen Bedrohung deaktiviert werden dürfen,
**dass** anhand von Informationen über eine aktuelle cyberkriminelle Bedrohung für zumindest eines der davon betroffenen Module (M1, ..., M36) die davon betroffenen Funktionen (F1, F2) identifiziert werden,
**dass** anhand der aktuellen Sicherheitsstufe diejenigen der identifizierten Funktionen (F1, F2) und Module (M1, ..., M36) ausgewählt werden, die deaktiviert werden dürfen, und
**dass** die ausgewählten Module (M1, ..., M36) gesperrt und die davon betroffenen Funktionen (F1, F2) deaktiviert werden.

2. Verfahren nach Patentanspruch 1,
**dadurch gekennzeichnet,**
**dass** ein- und dasselbe Modul von verschiedenen Anwendungsprogrammen (AW1, AW2) und/oder dem Betriebssystem (OS) des Computers (ID) verwendet wird und zur Bereitstellung mehrerer Funktionen (F1, F2) des Computers (ID) erforderlich ist.

3. Verfahren nach einem der vorhergehenden Patentansprüche,
**dadurch gekennzeichnet,**
**dass** die Module (M1, ..., M36) in verschiedenen Versionen oder Ausgabeständen verfügbar sind,
wobei mit den Informationen über die cyberkriminellen Bedrohungen für die Module (M1, ..., M36) auch Informationen über die betroffenen Versionen oder Ausgabestände der entsprechenden Module (M1, ..., M36) bereitgestellt und diese Informationen über die Versionen mit den Informationen über die jeweils installierte Version des entsprechenden Moduls verglichen wird,
wobei eine Deaktivierung der entsprechenden Funktion bzw. eine Sperrung des entsprechenden Moduls nur im Fall einer Übereinstimmung durchgeführt wird.

4. Verfahren nach Patentanspruch 3,
**dadurch gekennzeichnet,**
**dass** nach der Deaktivierung bzw. Sperrung eines Moduls (M1, ..., M36) eine andere, insbesondere neuere Variante des Moduls (M1, ..., M36) in einer Version oder mit einem Ausgabestand, der nicht von einer cyberkriminellen Bedrohung betroffen ist, automatisch gesucht, installiert und aktiviert wird, wonach ggf. eine entsprechende Funktion (F1, F2) des Computers (ID) wiederhergestellt oder aktiviert wird.

5. Verfahren nach einem der vorhergehenden Patentansprüche,
**dadurch gekennzeichnet,**
**dass** der Computer (ID) mit einem modular aufgebauten Betriebssystem (OS) ausgestattet ist,
wobei zumindest eines der Betriebssystemmodule eines der Module (M1, ..., M36) aufweist,
**dass** die Betriebssystemmodule ebenfalls den Sicherheitsstufen zugeordnet sind, und
**dass** analog zu den Modulen (M1, ..., M36) für die Anwendungsprogramme (AW1, AW2) auch die Module (M1, ..., M36) für die Betriebssystemmodule im Falle einer diesbezüglichen cyberkriminellen Bedrohung identifiziert und ggf. deaktiviert bzw. gesperrt werden.

6. Verfahren nach einem der vorhergehenden Patentansprüche,
**dadurch gekennzeichnet,**
**dass** die gesperrten Module (M1, ..., M36) deinstalliert werden oder als in Quarantäne befindlich gekennzeichnet werden oder in einen gesonderten, geschützten Speicherbereich des Computers (ID) verschoben werden.

7. Computer (ID), insbesondere eine industrielle Automatisierungskomponente, mit einer Sicherung gegen cyberkriminelle Bedrohungen,
wobei die Anwendungsprogramme (AW1, AW2) jeweils aus einer Anzahl Modulen (M1, ..., M36), insbesondere DLL's und anderer ausführbarer Programmcode, bestehen, und
wobei verschiedene der Anwendungsprogramme (AW1, AW2) und somit Module (M1, ..., M36) für verschiedene Funktionen (F1, F2) des Computers (ID) benötigt werden,
**dadurch gekennzeichnet,**
**dass** für den Computer (ID) zumindest zwei Sicherheitsstufen definiert sind, wobei für jede der Sicherheitsstufen diejenigen Funktionen (F1, F2) definiert sind, die im Falle einer diesbezüglichen cyberkriminellen-Bedrohung nicht deaktiviert werden dürfen und/oder welche Funktionen (F1, F2) im Falle einer diesbezüglichen cyberkriminellen Bedrohung deaktiviert werden dürfen, und
**dass** der Computer (ID) dazu eingerichtet ist,
**dass** Informationen über eine aktuelle cyberkriminelle Bedrohung für zumindest eines der davon betroffenen Module (M1, ..., M36) empfangen werden und anhand dieser Informationen die davon betroffenen Funktionen (F1, F2) identifiziert werden,
**dass** anhand der aktuellen Sicherheitsstufe diejenigen der identifizierten Funktionen (F1, F2) und Module (M1, ..., M36) ausgewählt werden, die deaktiviert werden dürfen, und dass die ausgewählten Module (M1, ..., M36) gesperrt und die davon betroffenen Funktionen (F1, F2) deaktiviert werden.

8. Computer (ID) nach Patentanspruch 7,
**dadurch gekennzeichnet,**
**dass** ein- und dasselbe Modul von verschiedenen Anwendungsprogrammen (AW1, AW2) und/oder dem Betriebssystem (OS) des Computers (ID) verwendet wird und zur Bereitstellung mehrerer Funktionen (F1, F2) des Computers (ID) erforderlich ist.

9. Computer (ID) nach Patentanspruch 7 oder 8,
**dadurch gekennzeichnet,**
**dass** der Computer (ID) dazu eingerichtet ist,
**dass** die Module (M1, ..., M36) in verschiedenen Versionen oder Ausgabeständen verfügbar sind,
wobei mit den Informationen über die cyberkriminellen Bedrohungen für die Module (M1, ..., M36) auch Informationen über die betroffenen Versionen oder Ausgabestände der entsprechenden Module (M1, ..., M36) bereitgestellt und diese Informationen über die Versionen mit den Informationen über die jeweils installierte Version des entsprechenden Moduls verglichen wird,
wobei eine Deaktivierung der entsprechenden Funktion bzw. eine Sperrung des entsprechenden Moduls nur im Fall einer Übereinstimmung durchgeführt wird.

10. Computer (ID) nach Patentanspruch 9,
**dadurch gekennzeichnet,**
**dass** der Computer (ID) dazu eingerichtet ist,
**dass** nach der Deaktivierung bzw. Sperrung eines Moduls eine andere, insbesondere neuere Variante des Moduls in einer Version oder mit einem Ausgabestand, der nicht von einer cyberkriminellen Bedrohung betroffen ist, automatisch gesucht, installiert und aktiviert wird, wonach ggf. eine entsprechende Funktion des Computers (ID) wiederhergestellt oder aktiviert wird.

11. Computer (ID) nach einem der Patentansprüche 7 bis 10,
**dadurch gekennzeichnet,**
**dass** der Computer (ID) mit einem modular aufgebauten Betriebssystem (OS) ausgestattet ist,
wobei zumindest eines der Betriebssystemmodule eines der Module (M1, ..., M36) aufweist,
**dass** die Funktionalitäten der Betriebssystemmodule ebenfalls den Sicherheitsstufen zugeordnet sind, und
**dass** der Computer (ID) dazu eingerichtet ist, dass analog zu den Modulen (M1, ..., M36) für die Anwendungsprogramme (AW1, AW2) auch die Module (M1, ..., M36) für die Betriebssystemmodule im Falle einer diesbezüglichen cyberkriminellen Bedrohung identifiziert und ggf. gesperrt werden und die entsprechenden Funktionalitäten deaktiviert werden.

12. Computer (ID) nach einem der Patentansprüche 7 bis 11,
**dadurch gekennzeichnet,**
**dass** der Computer (ID) dazu eingerichtet ist,
**dass** die gesperrten Module (M1, ..., M36) deinstalliert werden oder als in Quarantäne befindlich gekennzeichnet werden oder in einen gesonderten, geschützten Speicherbereich des Computers (ID) verschoben werden.

## Claims

1. Method for protecting a computer (ID),
in particular an industrial automation component,
against a cybercriminal threat,
wherein a number of application programs (AW1, AW2) are installed on the computer (ID),
wherein the application programs (AW1, AW2) each consist of a number of modules (M1, ..., M36), in particular DLLs and other executable program code, and
wherein different ones of the application programs (AW1, AW2) and therefore modules (M1, ..., M36) are required for different functions (F1, F2) of the computer (ID),
**characterized**
**in that** at least two security levels are defined for the computer (ID), wherein those functions (F1, F2) which must not be deactivated in the event of a relevant cybercriminal threat and/or which functions (F1, F2) can be deactivated in the event of a relevant cybercriminal threat are defined for each of the security levels,
**in that**, on the basis of information relating to a current cybercriminal threat for at least one of the affected modules (M1, ..., M36), the affected functions (F1, F2) are identified, in that, on the basis of the current security level, those functions and modules of the identified functions (F1, F2) and modules (M1, ..., M36) which can be deactivated are selected, and
**in that** the selected modules (M1, ..., M36) are blocked and the affected functions (F1, F2) are deactivated.

2. Method according to Patent Claim 1,
**characterized**
**in that** one and the same module is used by different application programs (AW1, AW2) and/or the operating system (OS) of the computer (ID) and is needed to provide a plurality of functions (F1, F2) of the computer (ID).

3. Method according to one of the preceding patent claims,
**characterized**
**in that** the modules (M1, ..., M36) are available in different versions or releases,
wherein the information relating to the cybercriminal threats for the modules (M1, ..., M36) is also used to provide information relating to the affected versions or releases of the corresponding modules (M1, ..., M36), and this information relating to the versions is compared with the information relating to the respectively installed version of the corresponding module,
wherein the corresponding function is deactivated or the corresponding module is blocked only in the event of correspondence.

4. Method according to Patent Claim 3,
**characterized**
**in that**, after a module (M1, ..., M36) has been deactivated or blocked, another variant, in particular a newer variant, of the module (M1, ..., M36) in a version or with a release which is not affected by a cybercriminal threat is automatically searched for, installed and activated, after which a corresponding function (F1, F2) of the computer (ID) is possibly restored or activated.

5. Method according to one of the preceding patent claims,
**characterized**
**in that** the computer (ID) is equipped with a modular operating system (OS),
wherein at least one of the operating system modules has one of the modules (M1, ..., M36),
**in that** the operating system modules are likewise assigned to the security levels, and
**in that**, in a similar manner to the modules (M1, ..., M36) for the application programs (AW1, AW2), the modules (M1, ..., M36) for the operating system modules are also identified and possibly deactivated or blocked in the event of a relevant cybercriminal threat.

6. Method according to one of the preceding patent claims,
**characterized**
**in that** the blocked modules (M1, ..., M36) are uninstalled or are marked as being in quarantine or are shifted to a separate, protected memory area of the computer (ID).

7. Computer (ID), in particular an industrial automation component, having protection against cybercriminal threats, wherein the application programs (AW1, AW2) each consist of a number of modules (M1, ..., M36), in particular DLLs and other executable program code, and
wherein different ones of the application programs (AW1, AW2) and therefore modules (M1, ..., M36) are required for different functions (F1, F2) of the computer (ID),
**characterized**
**in that** at least two security levels are defined for the computer (ID), wherein those functions (F1, F2) which must not be deactivated in the event of a relevant cybercriminal threat and/or which functions (F1, F2) can be deactivated in the event of a relevant cybercriminal threat are defined for each of the security levels, and
**in that** the computer (ID) is set up
such that information relating to a current cybercriminal threat for at least one of the affected modules (M1, ..., M36) is received and the affected functions (F1, F2) are identified on the basis of this information,
such that, on the basis of the current security level, those functions and modules of the identified functions (F1, F2) and modules (M1, ..., M36) which can be deactivated are selected, and
such that the selected modules (M1, ..., M36) are blocked and the affected functions (F1, F2) are deactivated.

8. Computer (ID) according to Patent Claim 7,
**characterized**
**in that** one and the same module is used by different application programs (AW1, AW2) and/or the operating system (OS) of the computer (ID) and is needed to provide a plurality of functions (F1, F2) of the computer (ID).

9. Computer (ID) according to Patent Claim 7 or 8,
**characterized**
**in that** the computer (ID) is set up
such that the modules (M1, ..., M36) are available in different versions or releases,
wherein the information relating to the cybercriminal threats for the modules (M1, ..., M36) is also used to provide information relating to the affected versions or releases of the corresponding modules (M1, ..., M36), and this information relating to the versions is compared with the information relating to the respectively installed version of the corresponding module,
wherein the corresponding function is deactivated or the corresponding module is blocked only in the event of correspondence.

10. Computer (ID) according to Patent Claim 9,
**characterized**
**in that** the computer (ID) is set up
such that, after a module has been deactivated or blocked, another variant, in particular a newer variant, of the module in a version or with a release which is not affected by a cybercriminal threat is automatically searched for, installed and activated, after which a corresponding function of the computer (ID) is possibly restored or activated.

11. Computer (ID) according to one of Patent Claims 7 to 10,
**characterized**
**in that** the computer (ID) is equipped with a modular operating system (OS),
wherein at least one of the operating system modules has one of the modules (M1, ..., M36),
**in that** the functionalities of the operating system modules are likewise assigned to the security levels, and
**in that** the computer (ID) is set up such that, in a similar manner to the modules (M1, ..., M36) for the application programs (AW1, AW2), the modules (M1, ..., M36) for the operating system modules are also identified and possibly blocked and the corresponding functionalities are deactivated in the event of a relevant cybercriminal threat.

12. Computer (ID) according to one of Patent Claims 7 to 11,
**characterized**
**in that** the computer (ID) is set up
such that the blocked modules (M1, ..., M36) are uninstalled or are marked as being in quarantine or are shifted to a separate, protected memory area of the computer (ID).

## Revendications

1. Procédé de sécurisation d'un ordinateur (ID), notamment d'un composant industriel d'automatisation,
à l'encontre d'une menace de cybercriminalité,
dans lequel on installe, sur l'ordinateur (ID), un certain nombre de programmes (AW1, AW2) d'application,
dans lequel les programmes (AW1, AW2) d'application sont constitués chacun d'un certain nombre de modules (M1, ..., M36), notamment de DLL et d'autres codes de programme réalisables, et
dans lequel on a besoin de certains des programmes (AW1, AW2) d'application et ainsi des modules (M1, ..., M36) pour certaines fonctions (F1, F2) de l'ordinateur (ID),
**caractérisé**
**en ce qu'**au moins deux stades de sécurité sont définis pour l'ordinateur (ID), dans lequel, pour chacun des stades de sécurité, sont définies les fonctions (F1, F2), qui, dans le cas d'une menace de cybercriminalité les concernant, ne doivent pas être désactivées et/ou les fonctions (F1, F2), qui doivent être désactivées, dans le cas d'une menace de cybercriminalité qui les concerne,
**en ce qu'**à l'aide d'informations sur une menace en cours de cybercriminalité pour au moins l'un des modules (M1, ..., M36) qui est concerné, on en identifie les fonctions (F1, F2) concernées,
**en ce qu'**à l'aide du stade en cours de sécurité, on choisit les fonctions (F1, F2) et les modules (M1, ..., M36) identifiés, qui doivent être désactivés, et
**en ce que** l'on bloque les modules (M1, ..., M36) choisis et on désactive les fonctions (F1, F2), qui en sont concernées.

2. Procédé suivant la revendication 1,
**caractérisé**
**en ce qu'**un seul et même module de divers programmes (AW1, AW2) d'application et/ou du système (OS) de fonctionnement de l'ordinateur (ID) est utilisé et est nécessaire pour procurer plusieurs fonctions (F1, F2) de l'ordinateur (ID).

3. Procédé suivant l'une des revendications précédentes,
**caractérisé**
**en ce que** les modules (M1, ..., M36) sont disponibles en diverses versions ou fichiers d'édition,
dans lequel on met à disposition, avec les informations sur les menaces de cybercriminalité pour les modules (M1, ..., M36), également des informations sur les versions ou les fichiers d'édition concernés des modules (M1, ..., M36) correspondants et on compare ces informations sur les versions aux informations sur la version installée, respectivement, du module correspondant,
dans lequel on effectue une désactivation de la fonction correspondante ou un blocage du module correspondant, seulement dans le cas d'une coïncidence.

4. Procédé suivant la revendication 3,
**caractérisé**
**en ce qu'**après la désactivation ou le blocage d'un module (M1, ..., M36), on recherche automatiquement, installe et active une autre variante, notamment nouvelle, du module (M1, ..., M36) dans une version ou par un fichier de sortie, qui n'est pas concerné par une menace de cybercriminalité, une fonction (F1, F2) correspondante étant éventuellement rétablie ou activée ensuite.

5. Procédé suivant l'une des revendications précédentes,
**caractérisé**
**en ce que** l'ordinateur (ID) est équipé d'un système (OS) de fonctionnement de constitution modulaire,
dans lequel au moins l'un des modules du système de fonctionnement a l'un des modules (M1, ..., M36),
**en ce que** les modules du système de fonctionnement sont associés également aux stades de sécurité, et
**en ce que**, d'une manière analogue aux modules (M1, ..., M36), pour les programmes (AW1, AW2) d'application, on identifie et, le cas échéant, désactive ou bloque également les modules (M1, ..., M36) pour les modules du système de fonctionnement, dans le cas d'une menace de cybercriminalité, qui les concerne.

6. Procédé suivant l'une des revendications précédentes,
**caractérisé**
**en ce que** l'on désinstalle les modules (M1, ..., M36) bloqués ou on les caractérise comme se trouvant en quarantaine ou on les déplace dans une région de la mémoire particulière, protégée de l'ordinateur (ID).

7. Ordinateur (ID), notamment d'un composant industriel d'automatisation, ayant une sécurisation à l'encontre de menaces de cybercriminalité,
dans lequel les programmes (AW1, AW2) d'application sont constitués chacun d'un certain nombre de modules (M1, ..., M36), notamment de DLL et d'autres codes de programme réalisables, et
dans lequel on a besoin de certains des programmes (AW1, AW2) d'application et ainsi des modules (M1, ..., M36) pour certaines fonctions (F1, F2) de l'ordinateur (ID),
**caractérisé**
**en ce qu'**au moins deux stades de sécurité sont définis pour l'ordinateur (ID), dans lequel, pour chacun des stades de sécurité, sont définies les fonctions (F1, F2), qui, dans le cas d'une menace de cybercriminalité les concernant, ne doivent pas être désactivées et/ou les fonctions (F1, F2), qui doivent être désactivées, dans le cas d'une menace de cybercriminalité, en ce qui les concerne,
**en ce que** l'ordinateur (ID) est conçu,
pour que des informations sur une menace en cours de cybercriminalité soient reçues pour au moins l'un des modules (M1, ..., M36), qui en est concerné, et pour, à l'aide de ces informations, identifier les fonctions (F1, F2), qui en sont concernées,
**en ce que**, à l'aide du stade de sécurité en cours, on choisit les fonctions identifiées et les modules (M1, ..., M36), qui doivent être désactivés, et
**en ce que** l'on bloque les modules (M1, ..., M36) choisis et on désactive les fonctions (F1, F2), qui en sont concernées.

8. Ordinateur (ID) suivant la revendication 7,
**caractérisé**
**en ce qu'**un seul et même module de divers programmes (AW1, AW2) d'application et/ou du système (OS) de fonctionnement de l'ordinateur (ID) est utilisé et est nécessaire pour procurer plusieurs fonctions (F1, F2) de l'ordinateur (ID).

9. Ordinateur (ID) suivant la revendication 7 ou 8,
**caractérisé**
**en ce que** l'ordinateur (ID) est conçu,
pour que les modules (M1, ..., M36) soient disponibles en divers versions ou fichiers d'édition,
dans lequel on met à disposition, avec les informations sur les menaces de cybercriminalité pour les modules (M1, ..., M36), également des informations sur les versions ou les fichiers d'édition concernés des modules (M1, ..., M36) correspondants et on compare ces informations sur les versions aux informations sur la version installée, respectivement, du module correspondant,
dans lequel on effectue une désactivation de la fonction correspondante ou un blocage du module correspondant, seulement dans le cas d'une coïncidence.

10. Ordinateur (ID) suivant la revendication 9,
**caractérisé**
**en ce que** l'ordinateur (ID) est conçu pour
après la désactivation ou le blocage d'un module (M1, ..., M36), rechercher automatiquement, installer et activer une autre variante, notamment nouvelle, du module (M1, ..., M36) dans une version ou par un fichier de sortie, qui n'est pas concerné par une menace de cybercriminalité, une fonction (F1, F2) correspondante étant éventuellement rétablie ou activée ensuite.

11. Ordinateur (ID) suivant l'une des revendications 7 à 10,
**caractérisé**
**en ce que** l'ordinateur (ID) est équipé d'un système (OS) de fonctionnement constitué de manière modulaire,
dans lequel au moins l'un des modules du système de fonctionnement a l'un des modules (MA, ..., M36),
**en ce que** les fonctionnalités des modules du système de fonctionnement sont associées également aux stades de sécurité, et
**en ce que** l'ordinateur (ID) est conçu pour, d'une manière analogue aux modules (M1, ..., M36), pour les programmes (AW1, AW2) d'application, identifier et, le cas échéant, désactiver ou bloquer également les modules (M1, ..., M36) pour les modules du système de fonctionnement, dans le cas d'une menace de cybercriminalité, qui les concerne.

12. Ordinateur (ID) suivant l'une des revendications 7 à 11, **caractérisé**
**en ce que** l'ordinateur (ID) est conçu pour
**en ce que** l'on désinstalle les modules (M1, ..., M36) bloqués ou on les caractérise comme se trouvant en quarantaine ou on les déplace dans une région de la mémoire particulière, protégée de l'ordinateur (ID).
